# EUROPEAN PATENT APPLICATION

(11) **EP 4 439 831 A1**
(43) Date of publication of application: **02.10.2024**
(21) Application number: 23769739.6
(22) Date of filing: 14.03.2023
(51) Int. Cl.: H01M 50/233, H01M 50/244, H01M 50/249

(54) **TRAY BOTTOM PLATE USED FOR BATTERIES, BATTERY TRAY, BATTERY PACK AND VEHICLE**

(30) Priority: 14.03.2022 CN 202220553715 U
(71) Applicant: BYD Company Limited, Shenzhen, Guangdong 518118 (CN)
(72) Inventor: HE, Wei, Shenzhen, Guangdong 518118 (CN); TANG, Jianglong, Shenzhen, Guangdong 518118 (CN); LI, Jianqiang, Shenzhen, Guangdong 518118 (CN); YANG, Shenglin, Shenzhen, Guangdong 518118 (CN)
(74) Representative: Dehns Germany Partnerschaft mbB
(86) International application number: PCT/CN2023/081236
(87) International publication number: WO 2023/174237

(57) **Abstract**

Embodiments of the present disclosure provide a bottom tray plate for a battery, a battery tray, a battery pack, and a vehicle. The bottom tray plate includes a main body portion and a turnup portion. The main body portion includes a bottom wall and a side wall. The side wall is arranged around the bottom wall. The side wall and the bottom wall jointly define an accommodation cavity. The accommodation cavity is configured to accommodate a battery. A thickness of the bottom wall is t₁, and 1 mm≤t₁≤3 mm. The turnup portion is arranged at an edge of the side wall and arranged around the side wall. A thickness of the turnup portion is t₂, and t₂>t₁.

## Description

### CROSS-REFERENCE TO RELATED APPLICATIONS

The present disclosure claims priority to Chinese patent Application No. 202220553715.X, filed on March 14, 2022 and entitled "BOTTOM TRAY PLATE FOR BATTERY, BATTERY TRAY, POWER BATTERY PACK, AND VEHICLE". The entire content of the above-referenced application is incorporated herein by reference.

### FIELD

The present disclosure relates to the technical field of vehicles, and more specifically, to a bottom tray plate for a battery, a battery tray, a battery pack, and a vehicle.

### BACKGROUND

In a battery pack, a battery tray is usually configured to bear a battery. During designing of battery packs with different specifications, due to different sizes, layouts, and the like of internal batteries and other components and different requirements on connection strength between a battery tray and other components, the design of the battery tray needs to be changed accordingly. In addition, a mold for manufacturing the battery tray usually needs to be redesigned to satisfy requirements on a structure of the changed battery tray, resulting in relatively high design costs and processing costs.

### SUMMARY

The present disclosure is intended to resolve at least one of technical problems in the related art. Therefore, the present disclosure provides a bottom tray plate for a battery. The bottom tray plate improves connection strength between the bottom tray plate and other components, and improves overall safety of a battery pack.

A bottom tray plate for a battery in an embodiment of a first aspect of the present disclosure includes a main body portion and a turnup portion. The main body portion includes a bottom wall and a side wall. The side wall is arranged around the bottom wall. The side wall and the bottom wall jointly define an accommodation cavity. The accommodation cavity is configured to accommodate a battery. A thickness of the bottom wall is t₁, and 1 mm≤t₁≤3 mm. The turnup portion is arranged at an edge of the side wall and arranged around the side wall. A thickness of the turnup portion is t₂, and t₂>t₁.

According to the bottom tray plate for a battery in embodiments of the present disclosure, the thickness of the bottom wall is set to t₁, the thickness of the turnup portion is set to t₂, 1 mm≤t₁≤3mm, and t₂>t₁. This improves connection strength between the bottom tray plate and other components, and improve overall safety of a battery pack.

In some embodiments, 2*t₁≤t₂≤3*t₁.

In some embodiments, a thickness of the side wall is t₃, and t₃=t₁.

In some embodiments, a depth of the accommodation cavity is t, and 15 mm≤t≤45 mm.

In some embodiments, an included angle between the side wall and the bottom wall is α, and 100°≤α≤120°.

In some embodiments, a through hole is formed on the turnup portion. A diameter of the through hole is D, and d≤D≤min{10*t₂, w/3}. d is a diameter of a fastener extending through the through hole and fixedly connected to a tray side frame. w is a width of the turnup portion.

In some embodiments, the turnup portion includes multiple sub-turnups. The multiple sub-turnups are successively connected end to end.

In some embodiments, multiple through holes are formed on each sub-turnup. The multiple through holes on each sub-turnup are arranged at intervals in a length direction of the sub-turnup and/or a width direction of the sub-turnup.

In some embodiments, the bottom tray plate is formed in one piece.

In some embodiments, the bottom tray plate is made of a composite material.

A battery pack in an embodiment of a second aspect of the present disclosure includes the bottom tray plate for a battery in the above embodiment of the first aspect of the present disclosure and a tray side frame. The tray side frame is arranged on a lower side of the turnup portion and fixedly connected to the bottom tray plate.

According to the battery tray in the embodiments of the present disclosure, the above bottom tray plate is used. This improves connection strength between the battery tray and other components, thereby ensuring use safety of a battery pack.

In some embodiments, the battery tray further includes a fastener. The fastener extends through the through hole and fixedly connected to the tray side frame.

In some embodiments, the tray side frame includes a side frame portion. The side frame portion is arranged around the side wall. The side frame portion is fixedly connected to the side wall and the turnup portion.

In some embodiments, the side frame portion is adhesively bonded to the side wall and the turnup portion.

In some embodiments, the tray side frame further includes a support portion. The support portion is arranged on a side of the side frame portion close to the accommodation cavity and supports a bottom of the bottom wall.

In some embodiments, the support portion is adhesively bonded to the bottom wall.

In some embodiments, a width of the side frame portion is wi. A width of the support portion is w₂, and w₂≥2*w₁/3.

In some embodiments, the tray side frame is formed in one piece.

A battery pack in an embodiment of a third aspect of the present disclosure includes at least one battery, a top cover, and the battery tray in the above embodiment of the second aspect of the present disclosure. The top cover is arranged on an open side of the accommodation cavity and jointly defines a mounting space with the bottom tray plate. The at least one battery is arranged in the mounting space.

According to the battery pack in the embodiments of the present disclosure, the above battery tray is used. This helps ensure overall safety of the battery pack. In a vehicle in an embodiment of the present disclosure, the above battery tray is used. This helps ensure use safety of the vehicle.

In some embodiments, a depth of the accommodation cavity is t. A height of each battery is h, and h/4≤t≤h/3.

In some embodiments, the top cover is fixedly connected to the tray side frame through the fastener.

A vehicle in an embodiment of a fourth aspect of the present disclosure includes the battery pack in the above embodiment of the third aspect of the present disclosure.

According to the vehicle in the embodiments of the present disclosure, the above battery pack is used. This helps ensure use safety of the vehicle.

Part of additional aspects and advantages of the present disclosure is provided in the following description. The part will be apparent from the following description, or is learned through practice of the present disclosure.

### BRIEF DESCRIPTION OF THE DRAWINGS

The above and/or additional aspects and advantages of the present disclosure become apparent and comprehensible from description of embodiments provided with reference to the following drawings.
FIG. 1 is a schematic diagram of a bottom tray plate according to an embodiment of the present disclosure;
FIG. 2 is a cross-sectional view of the bottom tray plate shown in FIG. 1;
FIG. 3 is a schematic diagram of a battery tray according to an embodiment of the present disclosure;
FIG. 4 is an exploded view of the battery tray shown in FIG. 3;
FIG. 5 is another exploded view of the battery tray shown in FIG. 3;
FIG. 6 is a cross-sectional view along a line A-A in FIG. 5;
FIG. 7 is an enlarged view of a part B circled in FIG. 6;
FIG. 8 is a schematic diagram of a battery pack according to an embodiment of the present disclosure; and
FIG. 9 is a schematic diagram of a vehicle according to an embodiment of the present disclosure.

In the drawings:
Battery tray 100, Bottom tray plate 1, Main body portion 11, Accommodation cavity 110, Bottom wall 111, Side wall 112, Turnup portion 12, Through hole 120, Sub-turnup 121, Tray side frame 2, Side frame portion 21, Support portion 22, Battery 3, Top cover 4, Fastener 5, Battery pack 200, Vehicle 300.

### DETAILED DESCRIPTION

Embodiments of the present disclosure are described in detail below, and examples of the embodiments are shown in the drawings. Same or similar elements or elements having same or similar functions are represented by same or similar reference numerals throughout the description. The embodiments described below with reference to the drawings are exemplary and used only for explaining the present disclosure, and should not be construed as a limitation on the present disclosure.

The following disclosure provides many different embodiments or examples to implement different structures of the present disclosure. To simplify the disclosure of the present disclosure, components and arrangements of specific examples are described below. Certainly, they are merely examples, and are not intended to limit the present disclosure. In addition, the present disclosure may reuse reference numerals and/or letters in different instances. This reuse is for simplicity and clarity, and does not indicate a relationship between the embodiments and/or arrangements discussed. Moreover, the present disclosure provides examples of various specific processes and materials, but a person of ordinary skill in the art may be aware of application of another process and/or use of another material.

A bottom tray plate 1 for a battery in an embodiment of the present disclosure is described below with reference to the drawings.

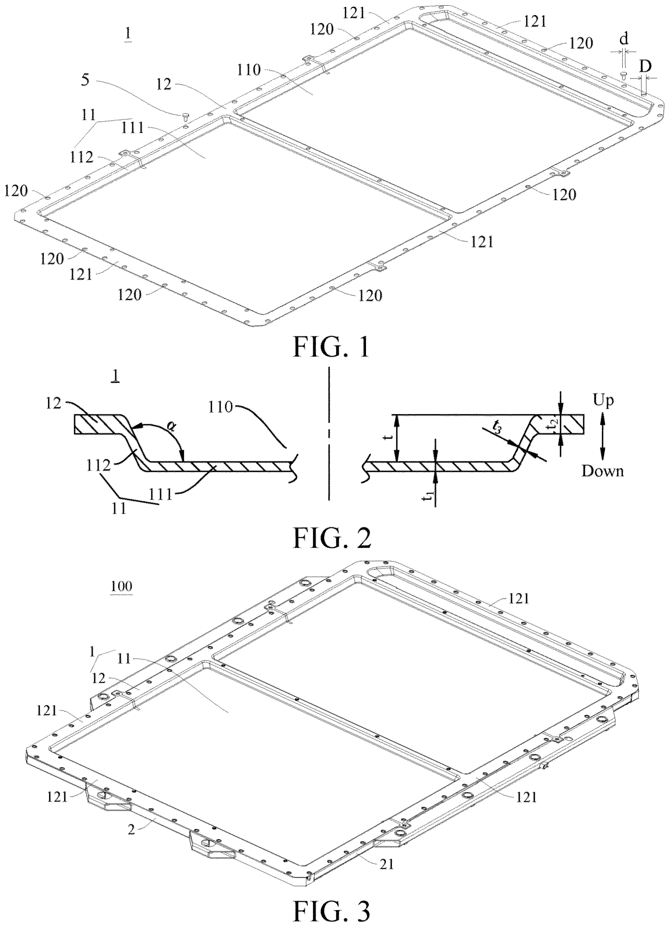

As shown in FIG. 1 and FIG. 2, the bottom tray plate 1 includes a main body portion 11. The main body portion 11 includes a bottom wall 111 and a side wall 112. The side wall 112 is arranged around the bottom wall 111. The side wall 112 and the bottom wall 111 jointly define an accommodation cavity 110. The accommodation cavity 110 is configured to accommodate a battery. The side wall 112 may substantially form an annular structure. The bottom wall 111 and the side wall 112 can limit the battery to some extent. This helps ensure stable mounting of the battery. In addition, the bottom tray plate 1 can protect the battery.

A thickness of the bottom wall 111 is ti. If 1 mm≤t₁≤3 mm, the thickness of the bottom wall 111 is properly set. This can avoid a poor bearing capacity of the bottom wall 111 caused by an excessively small thickness of the bottom wall 111, and can avoid processing difficulty, material wastes, and the like of the bottom wall 111 caused by an excessively large thickness of the bottom wall 111. For example, the thickness ti of the bottom wall 111 may be 1 mm, 1.3 mm, 1.8 mm, 2 mm, 2.5 mm, 2.7 mm, or 3 mm.

The bottom tray plate 1 further includes a turnup portion 12. The turnup portion 12 is located at an edge of the side wall 112, and the turnup portion 12 is arranged around the side wall 112. Therefore, the turnup portion 12 may substantially form an annular structure. At least part of the side wall 112 may be located on a radial inner side of the annular structure corresponding to the turnup portion 12.

A thickness of the turnup portion 12 is t₂, and t₂>t₁. Since the bottom tray plate 1 needs to connect to other components through the turnup portion 12, setting the thickness of the turnup portion 12 to be greater than the thickness of the bottom wall 111 can effectively improve structural strength of the turnup portion 12 and improve connection strength between the bottom tray plate 1 and the other components, thereby satisfying differentiated requirements of different battery packs on connection strength of the bottom tray plate 1. When the bottom tray plate 1 is used for a battery tray 100, connection strength between the battery tray 100 and the other components can be improved, thereby improving overall safety of a battery pack.

According to the bottom tray plate 1 for a battery in the embodiments of the present disclosure, the thickness of the bottom wall 111 is set to t₁, the thickness of the turnup portion is set to t₂, 1 mm≤t₁≤3mm, and t₂>t₁, to achieve local enhancement of the bottom tray plate 1, so that the connection strength between the bottom tray plate 1 and the other components can be improved, thereby improving the overall safety of the battery pack.

In some embodiments, as shown in FIG. 2, 2*t₁≤t₂≤3*t1. For example, t₂ may be 2*t₁, 2.3*t₁, 2.5*t₁, 2.8*t₁, or 3*t₁. In this case, relative magnitudes of the thickness of the turnup portion 12 and the thickness of the bottom wall 111 are properly set, ensuring proper distribution and use of materials, facilitates processing of the turnup portion 12 and the bottom wall 111, and achieving proper setting of a height of the battery pack while ensuring that the bottom tray plate 1 can match different battery packs.

In some embodiments, as shown in FIG. 2, a thickness of the side wall 112 is t₃, and t₃=t₁, to facilitate simplification of processing of the main body portion 11. For example, when the main body portion 11 is a member formed through compression molding, it helps reduce requirements on designing of a mold.

In some embodiments, as shown in FIG. 2, a depth of the accommodation cavity 110 is t, and 15 mm≤t≤ 45 mm. In this way, the accommodation cavity 110 can satisfy demands for accommodating different batteries. This improves applicability of the bottom tray plate 1. For example, the depth of the accommodation cavity 110 may be 15 mm, 20 mm, 30 mm, 36 mm, 42 mm, or 45 mm.

In some embodiments, as shown in FIG. 2, an included angle between the side wall 112 and the bottom wall 111 is α, and 100°≤α≤120°.In this way, the side wall 112 can obliquely extend away from a center of the bottom wall 111 in a direction from the bottom wall to the turnup portion 12 from an edge of the bottom wall 111, to reach the turnup portion 12. This helps ensure a placement port with a proper size on the accommodation cavity 110, so that the battery is smoothly removed and placed through the placement port. In addition, when the main body portion 11 is a member formed through compression molding, the included angle between the side wall 112 and the bottom wall 111 satisfies the above requirement. This facilitates demolding of the main body portion 11 during processing, and improves convenience of demolding of the main body portion 11, thereby facilitating improvement of processing efficiency of the bottom tray plate 1. For example, the included angle α may be 100°, 103°, 110°, 115°, or 120°.

In addition, the above extending direction of the side wall 112 intersects with a normal direction of the bottom wall 111 at a non-zero included angle. This increases an extending length of the side wall 112. When the side wall 112 is adhesively bonded to a tray side frame 2, an adhesive bonding area between the side wall 112 and the tray side frame 2 can be increased. In this way, connection strength between the bottom tray plate 1 and the tray side frame 2 is improved to some extent, thereby further ensuring mounting reliability of the battery.

In some embodiments, as shown in FIG. 1, a plurality of through holes 120 are formed on the turnup portion 12. A diameter of each through hole 120 is D, and d≤D≤min{10*t₂, w/3}. d is a diameter of a fastener 5 extending through the through hole 120 and fixedly connected to a tray side frame 2. w is a width of the turnup portion 12. Through setting of D≥d, the through hole 120 can effectively avoid the fastener 5. This ensures smooth mounting of the fastener 5 to the through hole 120, facilitates relieve of squeeze of the fastener 5 on an edge part of the through hole 120, and avoids additional stress generated between the fastener 5 and the turnup portion 12. Setting D≤min{10*t₂, w/3}, that is, D being less than or equal to a smallest value between 10*t₂ and w/3 helps ensure structural strength of the edge part of the through hole 120, so that the through hole 120 has desirable structural stability, thereby ensuring firm connection between the turnup portion 12 and other components, for example, the tray side frame 2.

It may be understood that, when the bottom tray plate 1 is applied to the battery tray 100, the bottom tray plate 1 is fixedly connected to the tray side frame 2. Through the above fastener 5, the tray side frame 2 can achieve firm mounting of the battery in a height direction thereof. For example, a top side of the bottom tray plate 1 is provided with a top cover 4. The fastener 5 is configured to firmly connect the top cover to the tray side frame 2. In the example of FIG. 1, the turnup portion 12 includes multiple sub-turnups 121. The multiple sub-turnups 121 are successively connected end to end, so that the turnup portion 12 forms a polygonal annulus. Multiple through holes 120 are formed on each sub-turnup 121. The multiple through holes 120 on each sub-turnup 121 may be arranged at intervals in a length direction of the sub-turnup 121 and/or a width direction of the sub-turnup 121.

In some embodiments, the bottom tray plate 1 is formed in one piece. This reduces connection processes between the main body portion 11 and the turnup portion 12, thereby facilitating improvement of the processing efficiency of the bottom tray plate 1. In addition, a connection structure or the like does not need to be formed on the main body portion 11 and/or the turnup portion 12. This facilitates simplification of the structure of the bottom tray plate 1, facilitates cost reduction, and helps ensure connection strength between parts of the bottom tray plate 1, thereby ensuring overall structural strength of the bottom tray plate 1.

It may be understood that, when the bottom tray plate 1 is formed in one piece, a processing manner of the bottom tray plate 1 may be set based on an actual need. For example, the bottom tray plate 1 may be formed in one piece through compression molding. A replaceable module is arranged at a part on a mold configured to manufacture the bottom tray plate 1 corresponding to the turnup portion 12. A different module has a different thickness. A thickness of the module matches the thickness of the turnup portion 12. For example, if the thickness of the turnup portion 12 is relatively large, the thickness of the module is relatively small. If the thickness of the turnup portion 12 is relatively small, the thickness of the module is relatively large. Then the main body portion 11 and the turnup portion 12 are integrally formed through a compression molding process or the like.

It may be learned that, during the manufacturing of the bottom tray plate 1, for to-be-processed turnup portions 12 with different thicknesses, modules with corresponding thickness may be used, to satisfy different thickness demands of the turnup portions 12. In this way, universality of the mold configured to manufacture the bottom tray plate 1 is effectively improved, manufacturing costs are reduced, and redesigning of the mold configured to manufacture the bottom tray plate 1 is avoided.

In addition, in some technologies, due to a different battery height of a battery pack, an overall height of a battery pack is adjusted. In this case, the battery tray cannot match the battery pack with the different height. Usually, the battery tray and the mold configured to manufacture the battery tray need to be redesigned. In the present disclosure, the connection between the bottom tray plate 1 and the other components is reliable. In addition, since the thickness of the turnup portion 12 is greater than the thickness of the bottom wall 111, the thickness of the turnup portion 12 is not limited by the thickness of the bottom wall 111. Therefore, a thickness design of the turnup portion 12 is relatively flexible. The thickness of the turnup portion 12 may be appropriately adjusted based on a design demand, so that the bottom tray plate 1 satisfies demands of battery packs with different heights for connection of the bottom tray plate 1. In this way, the bottom tray plate 1 can adapt to battery packs with different heights. This increases adaptability of the bottom tray plate 1, and avoids redesigning of the bottom tray plate 1 and the mold configured to manufacture the bottom tray plate 1.

When the battery tray 100 of the bottom tray plate 1 of the present disclosure is used for battery packs with different heights, the thickness of the turnup portion 12 may be properly adjusted based on an actual need, so that the battery tray 100 can match the battery packs with different heights. This improves applicability of the battery tray 100. When the battery tray 100 includes the tray side frame 2, neither redesigning of the tray side frame 2 to satisfy requirements of the battery packs of different heights for connection strength between the battery tray 100 and the other components is required, nor redesigning of a mold configured to manufacture the tray side frame 2 is required. This effectively reduces design costs and processing costs.

In some embodiments, the bottom tray plate 1 is made of a composite material, to ensure the structural strength of the bottom tray plate 1, so that the bottom tray plate 1 stably bears the battery.

In addition, in some technologies, the bottom tray plate is an aluminum alloy member. When anomalies such as a coolant leakage of the battery pack occur, a risk of high-voltage arcing is prone to occur between the bottom tray plate and the battery as a result of conductivity of the bottom tray plate. However, in the present disclosure, since the bottom tray plate 1 is made of a composite material, the bottom tray plate 1 has desirable electrical insulation. Even if the battery pack has a coolant leakage or the like, the risk of high-voltage arcing can be avoided between the bottom tray plate 1 and the battery, thereby ensuring normal use of the battery pack.

Optionally, when the bottom tray plate 1 is made of a composite material, since the thickness of the turnup portion 12 is greater than the thickness of the bottom wall 111, during manufacturing of the bottom tray plate 1, multiple layers of prepregs cut based a shape of the turnup portion 12 need to be laid at a position corresponding to the turnup portion 12, and a replaceable module needs to be arranged on a part on a mold configured to manufacture the bottom tray plate 1 corresponding to the turnup portion 12. A different module has a different thickness, and a thickness of the module matches the thickness of the turnup portion 12. Then the main body portion 11 and the turnup portion 12 are combined through a hot pressing process or the like.

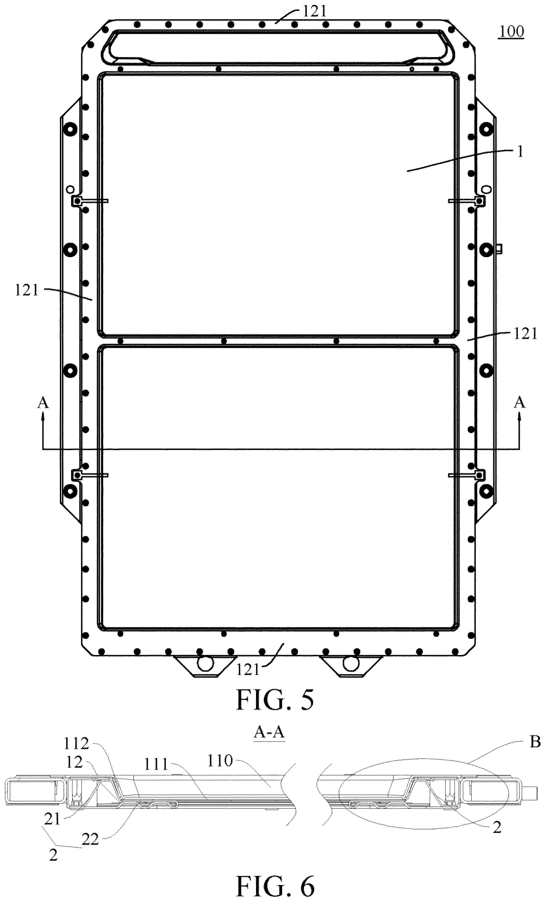

According to an embodiment of a second aspect of the present disclosure, as shown in FIG. 3 to FIG. 5, a battery tray 100 includes a bottom tray plate 1 and a tray side frame 2. The bottom tray plate 1 is the bottom tray plate 1 for a battery in the embodiment of the first aspect of the present disclosure. The tray side frame 2 is arranged on a lower side of the turnup portion 12, and the tray side frame 2 is fixedly connected to the bottom tray plate 1. The tray side frame 2 may directly or indirectly support the bottom tray plate 1, so that a battery is stably arranged in the accommodation cavity 110 of the bottom tray plate 1, and the connection between the bottom tray plate 1 and the tray side frame 2 can be improved to some extent, thereby ensuring reliable fixing of the tray side frame 2 to the bottom tray plate 1.

According to the battery tray 100 in the embodiments of the present disclosure, the above bottom tray plate 1 is used. This improves connection strength between the battery tray 100 and other components, thereby ensuring use safety of a battery pack.

In some embodiments, the battery tray 100 further includes a fastener 5. The fastener 5 extends through the through hole 120 and is fixedly connected to the tray side frame 2. In some embodiments, multiple fasteners 5 are arranged, and multiple through holes 120 are arranged. The multiple fasteners 5 are in one-to-one correspondence with the multiple through holes 120. In this way, the battery tray 100 is fixedly connected to the tray side frame 2, and is not prone to dislocation and movement.

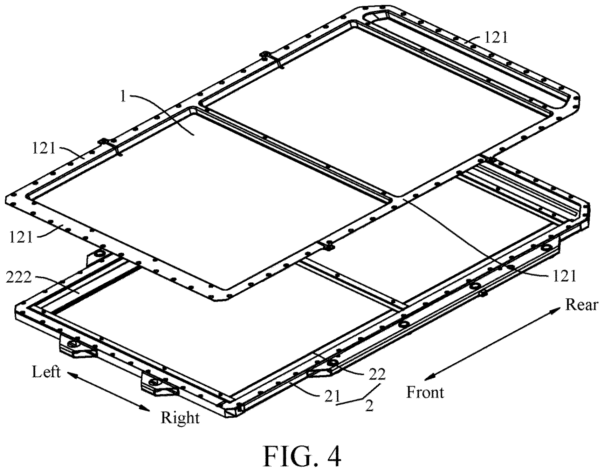

In some embodiments, as shown in FIG. 4, FIG. 6, and FIG. 7, the tray side frame 2 includes a side frame portion 21. The side frame portion 21 is arranged around the side wall 112, so that the side frame portion 21 may be substantially formed in an annular structure. In addition, the side frame portion 21 is arranged on a side of the side wall 112 facing away from the accommodation cavity 110. The side frame portion 21 is fixedly connected to the side wall 112 and the turnup portion 12, that is, the side frame portion 21 is fixedly connected to the side wall 112, and the side frame portion 21 is fixedly connected to the turnup portion 12. This helps ensure a sufficient connection area between the side frame portion 21 and the bottom tray plate 1, thereby ensuring reliable connection of the side frame portion 21 to the bottom tray plate 1.

It should be noted that, in the description of the present disclosure, "annular" is understood in a broad sense. To be specific, it is not limited to a "circularly annulus", for example, may be a "polygonal annulus". For example, in the examples of FIG. 1 to FIG. 4, the side frame portion 21, the side wall 112, and the turnup portion 12 each are substantially formed in a shape of a quadrilateral annulus. The side frame portion 21 has four edges. Each edge of the side frame portion 21 is fixed to a corresponding edge of the side wall 112, and each edge of the side frame portion 21 is fixed to a corresponding edge of the turnup portion 12 (for example, the above corresponding sub-turnup 121).

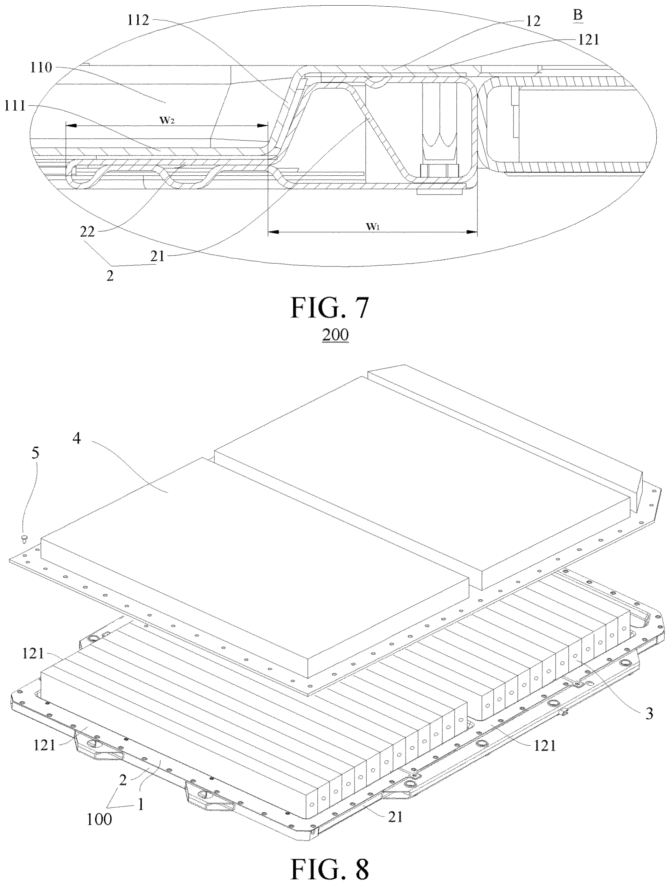

In some embodiments, as shown in FIG. 7, the side frame portion 21 is adhesively bonded to the side wall 112. In this case, neither the side wall 112 nor the side frame portion 21 needs to be provided with a connection hole, to simplify processing procedures of the side frame portion 21 and the side wall 112. In addition, difficulty in sealing the accommodation cavity 110 as a result of providing a connection hole on the side wall 112 that participates in defining the accommodation cavity 110 is avoided. The side frame portion 21 is adhesively bonded to the turnup portion 12. In this case, neither the turnup portion 12 nor the side frame portion 21 needs to be provided with a connection hole, to simplify processing procedures of the side frame portion 21 and the turnup portion 12. In this way, a relatively large adhesive bonding area is ensured between the side frame portion 21 and the bottom tray plate 1, thereby effectively ensuring connection strength between the tray side frame 2 and the bottom tray plate 1.

In some embodiments, as shown in FIG. 7, the tray side frame 2 further includes a support portion 22. The support portion 22 is arranged on a side of the side frame portion 21 close to the accommodation cavity 110, and the support portion 22 supports a bottom of the bottom wall 111. In this way, the support portion 22 can indirectly bear the battery, to effectively ensure reliable mounting of the battery. In addition, requirements on bearing of the bottom tray plate 1 are reduced. This facilitates reduction of requirements on arrangement of the bottom tray plate 1, and facilitates reduction of costs of the battery tray 100.

A direction "inner" means a direction in a radial direction of the side frame portion 21 close to a central axis of the side frame portion 21.

It may be understood that, a specific arrangement manner of the support portion 22 may be set arranged based on an actual demand. For example, in the examples of FIG. 4, FIG. 6, and FIG. 7, the side frame portion 21 is formed in an annular structure, and the support portion 22 is arranged corresponding to a part of an entire inner peripheral wall of the side frame portion 21, to simplify the structure of the support portion 22, reduce material consumption of the support portion 22, and reduce costs while satisfying a bearing demand of the battery. Certainly, the support portion 22 may alternatively be arranged corresponding to the entire inner peripheral wall of the side frame portion 21. For example, the support portion 22 may define an annular structure. This facilitates improvement of a bearing capacity of the tray side frame 2.

In some optional embodiments, as shown in FIG. 7, the support portion 22 and the side frame portion 21 are formed in one piece. This reduces connection processes between the support portion 22 and the side frame portion 21, and facilitates improvement of processing efficiency of the tray side frame 2. In addition, a connection structure or the like does not need to be formed on the support portion 22 and/or the side frame portion 21. This facilitates simplification of the structure of the tray side frame 2 and facilitates cost reduction.

In some embodiments, as shown in FIG. 7, the support portion 22 is adhesively bonded to the bottom wall 111. In this case, neither the bottom wall 111 nor the support portion 22 needs to be provided with a connection hole, to simplify processing procedures of the support portion 22 and the bottom wall 111. In addition, difficulty in sealing the accommodation cavity 110 as a result of providing a connection hole on the bottom wall 111 that participates in defining the accommodation cavity 110 is avoided.

In some embodiments, as shown in FIG. 7, a width of the side frame portion 21 is wi, and a width of the support portion 22 is and w₂≥2*w₁/3. This helps ensure a support width of the support portion 22 for the bottom wall 111, and achieves effective support of the support portion 22 to the bottom wall 111. For example, w₂/w₁ may be 2/3, 3/4, or 4/5.

Referring to FIG. 8, FIG. 8 is a schematic diagram of a battery pack according to an embodiment of the present disclosure. According to an embodiment of a third aspect of the present disclosure, a battery pack 200 includes at least one battery 3, a top cover 4, and a battery tray 100. The battery pack 100 is the battery pack 100 in the above embodiment of the second aspect of the present disclosure. The top cover 4 is arranged on an open side of the accommodation cavity 110. The top cover 4 and the bottom tray plate 1 jointly define a mounting space. The at least one battery 3 is arranged in the mounting space.

According to the battery pack 200 in the embodiments of the present disclosure, the above battery tray 100 is used, to help ensure overall safety of the battery pack 200.

In some embodiments, as shown in FIG. 2, a depth of the accommodation cavity 110 is t, a height of each battery 3 is h, and h/4≤t≤h/3. Therefore, the height of the battery 3 is greater than the depth of the accommodation cavity 110. The accommodation cavity 110 is configured to accommodate a part of the battery. In this way, the battery can be smoothly removed from the accommodation cavity 110 through another part of the battery 3, or the battery 3 can be stably placed in the accommodation cavity 110. Through proper setting of a magnitude relationship between the depth of the accommodation cavity 110 and the height of the battery 3, processing convenience of the battery tray 100 is improved while ensuring the stable placement of the battery 3. For example, t/h may be 0.25, 0.27, 0.29, 0.3, or 1/3.

In this case, the top cover 4 defines a storage cavity. The storage cavity may be configured to accommodate the other part of the battery 3. In this case, the mounting space may include the accommodation cavity 110 and the storage cavity, to achieve all-round protection for the battery.

In some embodiments, a bottom guard plate is arranged on a lower side of the battery tray 100, to further improve a protective capability of the battery pack 200.

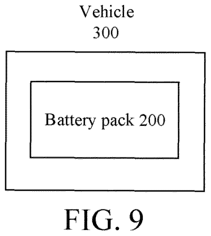

Referring to FIG. 9, FIG. 9 is a schematic diagram of a vehicle according to an embodiment of the present disclosure. A vehicle 300 in an embodiment of a fourth aspect of the present disclosure includes the battery pack 200 in the above embodiment of the third aspect of the embodiments of the present disclosure.

According to the vehicle 300 in the embodiments of the present disclosure, the above battery pack 200 is used, to help ensure use safety of the vehicle 300.

Other compositions and operations of the vehicle 300 in the embodiments of the present disclosure are known to a person of ordinary skill in the art, and therefore are not described in detail herein.

In the description of the present disclosure, it should be understood that orientation or position relationships indicated by the terms such as "center", "longitudinal", "transverse", "length", "width", "thickness", "up", "down", "front", "rear", "left", "right", "vertical", "horizontal", "top", "bottom", "inside", "outside", "clockwise", "anticlockwise", "axial direction", "radial direction", and "circumferential direction" are based on orientation or position relationships shown in the drawings, and are merely used for ease and brevity of description of the present disclosure, rather than indicating or implying that the mentioned device or element needs to have a particular orientation or be constructed and operated in a particular orientation. Therefore, such terms should not be construed as a limitation on the present disclosure. Moreover, features defined by "first" and "second" may explicitly or implicitly include one or more features. In the description of the present disclosure, unless otherwise stated, "multiple" means two or more.

In the description of the present disclosure, it should be understood that, unless otherwise explicitly specified or defined, terms "mount", "connect", and "connection" are to be understood in a broad sense. For example, the connection may be a fixed connection, a detachable connection, or an integral connection; or may be a mechanical connection or an electrical connection; or may be a direct connection, an indirect connection through an intermediate medium, or internal communication between two elements. A person of ordinary skill in the art may understand the specific meanings of the above terms in the present disclosure based on specific situations.

In the description of this specification, descriptions provided with reference to terms such as "an embodiment", "some embodiments", "an exemplary embodiment", "an example", "a specific example", and "some examples" mean that specific features, structures, materials, or characteristics described with reference to the embodiment or example are included in at least one embodiment or example of the present disclosure. In this specification, exemplary expressions of the above terms do not necessarily mean the same embodiment or example. In addition, the described specific features, structures, materials, or characteristics may be combined in a proper manner in any one or more embodiments or examples.

Although the embodiments of the present disclosure are shown and described, a person of ordinary skill in the art may understand that, various changes, modifications, replacements, and variations may be made to the embodiments without departing from the principle and spirit of the present disclosure, and the scope of the present disclosure is defined by the appended claims and their equivalents.

## Claims

1. A bottom tray plate (1) for a battery, comprising:
a main body portion (11), the main body portion (11) comprising a bottom wall (111) and a side wall (112), the side wall (112) being arranged around the bottom wall (111), the side wall (112) and the bottom wall (111) jointly defining an accommodation cavity (110), the accommodation cavity (110) being configured to accommodate a battery (3), a thickness of the bottom wall (111) being t₁, and 1 mm≤t₁≤3 mm; and
a turnup portion (12), the turnup portion (12) being arranged at an edge of the side wall (112) and arranged around the side wall (112), a thickness of the turnup portion (12) being t₂, and t₂>t₁.

2. The bottom tray plate (1) for a battery according to claim 1, wherein 2*t₁≤t₂≤3*t₁.

3. The bottom tray plate (1) for a battery according to claim 1 or 2, wherein a thickness of the side wall (112) is t₃, and t₃=t₁.

4. The bottom tray plate (1) for a battery according to any of claims 1 to 3, wherein a depth of the accommodation cavity (110) is t, and 15 mm≤t≤45 mm.

5. The bottom tray plate (1) for a battery according to any of claims 1 to 4, wherein an included angle between the side wall (112) and the bottom wall (111) is α, and 100°≤α≤120°.

6. The bottom tray plate (1) for a battery according to any of claims 1 to 5, wherein a through hole (120) is formed on the turnup portion (12); a diameter of the through hole (120) is D; d≤D≤min{10*t₂, w/3}, d is a diameter of a fastener (5) extending through the through hole (120) and fixedly connected to a tray side frame (2), and w is a width of the turnup portion (12).

7. The bottom tray plate (1) for a battery according to claim 6, wherein the turnup portion (12) comprises a plurality of sub-turnups (121); and the plurality of sub-turnups (121) are successively connected end to end.

8. The bottom tray plate (1) for a battery according to claim 7, wherein a plurality of through holes (120) are formed on each sub-turnup (121), and the plurality of through holes (120) on each sub-turnup (121) are arranged at intervals in a length direction of the sub-turnup (121) and/or a width direction of the sub-turnup (121).

9. The bottom tray plate (1) for a battery according to any of claims 1 to 8, wherein the bottom tray plate (1) is formed in one piece.

10. The bottom tray plate (1) for a battery according to any of claims 1 to 9, wherein the bottom tray plate (1) is made of a composite material.

11. A battery tray (100), comprising:
the bottom tray plate (1) for a battery according to any of claims 1 to 10; and
a tray side frame (2), the tray side frame (2) being arranged on a lower side of the turnup portion (12) and fixedly connected to the bottom tray plate (1).

12. The battery tray (100) according to claim 11, further comprising a fastener (5), the fastener (5) extending through the through hole (120) and being fixedly connected to the tray side frame (2).

13. The battery tray (100) according to claim 11 or 12, wherein the tray side frame (2) comprises a side frame portion (21), the side frame portion (21) is arranged around the side wall (112), and the side frame portion (21) is fixedly connected to the side wall (112) and the turnup portion (12).

14. The battery tray (100) according to claim 13, wherein the side frame portion (21) is adhesively bonded to the side wall (112) and the turnup portion (12).

15. The battery tray (100) according to claim 13 or 14, wherein the tray side frame (2) further comprises a support portion (22), and the support portion (22) being arranged on a side of the side frame portion (21) close to the accommodation cavity (110) and supports a bottom of the bottom wall (111).

16. The battery tray (100) according to claim 15, wherein the support portion (22) is adhesively bonded to the bottom wall (111).

17. The battery tray (100) according to claim 15 or 16, wherein a width of the side frame portion (21) is wi, a width of the support portion (22) is and w₂≥2*w₁/3.

18. A battery pack (200), comprising at least one battery (3), a top cover (4), and the battery tray (100) according to any of claims 11 to 17, the top cover (4) being arranged on an open side of the accommodation cavity (110) and jointly defining a mounting space with the bottom tray plate (1), and the at least one battery (3) being arranged in the mounting space.

19. The battery pack (200) according to claim 18, wherein a depth of the accommodation cavity (110) is t, a height of each battery (3) is h, and h/4≤t≤h/3.

20. A vehicle (300), comprising the battery pack (200) according to claim 18 or 19.
